# EUROPÄISCHE PATENTSCHRIFT

(11) **EP 2 194 750 B1**
(45) Veröffentlichungstag und Bekanntmachung des Hinweises auf die Patenterteilung: **29.06.2011**
(21) Anmeldenummer: 10002772.1
(22) Anmeldetag: 15.02.2000
(51) Int. Cl.: H04W 72/10

(54) **Betrieb eines Mobilfunknetzes unter Verwendung von Zugriffsberechtigungsdaten**
Operation of a mobile radio network using access permission data
Opération d'un réseau mobile utilisant des données de permission d'accès

(30) Priorität: 08.03.1999 DE 19910239
(43) Veröffentlichungstag der Anmeldung: 09.06.2010
(62) Teilanmeldung aus: 07009265.5
(73) Patentinhaber: IPCom GmbH & Co. KG, 82049 Pullach (DE)
(72) Erfinder: Fischer, Ralf, 31199 Diekholzen (DE); Hans, Martin, 31162 Bad Salzdetfurth (DE); Kowalewski, Frank, Dr., 37085 Göttingen (DE); Laumen, Josef, 85375 Neufahrn (DE); Schmidt, Gunnar, 78052 Villingen-Schwenningen (DE); Lechner, Detlef, 12101 Berlin-Tempelhof (DE); Schulz, Holger, 10587 Berlin (DE)
(74) Vertreter: Molnia, David

(56) Entgegenhaltungen:
- WO-A-91/15069
- WO-A-97/19525
- WO-A1-97/09836
- US-A- 4 707 832

## Beschreibung

Die Erfindung geht von einem Verfahren zur Zugriffskontrolle auf einen Telekommunikationskanal für eine Teilnehmerstation sowie von einem entsprechenden Telekommunikationsystem nach der Gattung der unabhängigen Ansprüche aus.

In der nicht vorveröffentlichten deutschen Patentanmeldung DE 198 38 832 A1 wird ein Verfahren zur Zugriffskontrolle auf einen Telekommunikationskanal eines Telekommunikationsnetzes für mindestens eine Teilnehmerstation des Telekommunikationsnetzes beschrieben, wobei Informationssignale an die mindestens eine Teilnehmerstation übertragen werden.

Aus der WO97/19525 A1 ist ein Übertragungsverfahren und Vorrichtung zur Zugriffssteuerung bekannt, in dem eine Basisstation einer Vielzahl von Mobilstationen unterschiedliche Zugriffswahrscheinlichkeiten für unterschiedliche Nachrichtenklassen übersendet und jede Mobilstation aus den empfangenen Zugriffswahrscheinlichkeiten Zeitverzögerungen herleitet, die sie dann für die Übertragung einer Nachricht entsprechend der Nachrichtenklasse einhalten muss.

### Vorteile der Erfindung

Das erfindungsgemäße Verfahren und das erfindungsgemäße Telekommunikationsystem mit den Merkmalen der unabhängigen Ansprüche haben demgegenüber den Vorteil, dass mit den Informationssignalen Zugriffsberechtigungsdaten zur mindestens einen Teilnehmerstation übertragen werden, dass bei Empfang der Zugriffsberechtigungsdaten in einer Auswerteeinheit der mindestens einen Teilnehmerstation geprüft wird, ob die Zugriffsberechtigungsdaten Zugriffsberechtigungsdaten einen Zugriffsschwellwert umfassen, wobei der Zugriffsschwellwert mit einer Zufallszahl oder einer Pseudozufallszahl verglichen wird, und dass das Zugriffsrecht auf einen Telekommunikationskanal der mindestens einen Teilnehmerstation in Abhängigkeit des Vergleichsergebnisses, vorzugsweise unter der Bedingung, dass die Zufallszahl oder die Pseudozufallszahl größer oder gleich dem Zugriffsschwellwert ist, zugeteilt wird. Auf diese Weise lässt sich eine zufällige Verteilung der Zugangsberechtigung zu diesem Telekommunikationskanal für eine oder mehrere Teilnehmerstationen realisieren. Diese Zugriffskontrolle nimmt ein Minimum an Übertragungskapazität für die Übertragung der Informationssignale in Anspruch, da sie lediglich durch Übertragung des Zugriffsschwellwertes bewirkt wird.

Durch die in den Unteransprüchen aufgeführten Maßnahmen sind vorteilhafte Weiterbildungen und Verbesserungen des im unabhängigen Anspruch 1 angegebenen Verfahrens bzw. des im unabhängigen Anspruch 10 angegebenen telekommunikationsystems möglich.

Besonders vorteilhaft ist es, dass in der Auswerteeinheit der mindestens einen Teilnehmerstation geprüft wird, ob die Zugriffsberechtigungsdaten Zugriffsberechtigungsinformationen mit Zugriffsklasseninformationen für mindestens eine vorgegebene Nutzerklasse umfassen, wobei in diesem Fall und unter der Voraussetzung, dass die mindestens eine Teilnehmerstation der mindestens einen vorgegebenen Nutzerklasse zugeordnet ist, der Zugriff auf einen Telekommunikationskanal der mindestens einen Teilnehmerstation in Abhängigkeit des Zugriffsklasseninformation für diese Nutzerklasse erteilt wird. Auf diese Weise können Teilnehmerstationen einer vorgegebenen Nutzerklasse selbst dann zur Nutzung des Telekommunikationskanals zugelassen werden, wenn sie aufgrund der zufälligen Verteilung mittels Zugriffsschwellwert nicht zum Zugriff auf diesen Telekommunikationskanal berechtigt wären. So können beispielsweise Teilnehmerstationen von Notdiensten, wie der Polizei oder der Feuerwehr einer solchen vorgegebenen Nutzerklasse zugeordnet sein, die dann unabhängig von der zufälligen Verteilung durch entsprechende Zugriffsschwellwertinformationen priorisiert auf den Telekommunikationskanal zugreifen können.

Ein weiterer Vorteil besteht darin, dass in der Auswerteeinheit der mindestens einen Teilnehmerstation geprüft wird, ob die Zugriffsberechtigungsdaten Prioritätsinformationen in Form eines Prioritätsschwellwertes umfassen, wobei in diesem Fall und unter der Voraussetzung, dass die mindestens eine Teilnehmerstation einer Prioritätsklasse mit einem Prioritätswert zugeordnet ist, der Prioritätswert mit dem Prioritätsschwellwert verglichen wird, und der Zugriff auf einen Telekommunikationskanal der mindestens einen Teilnehmerstation in Abhängigkeit des Vergleichsergebnisses, vorzugsweise unter der Bedingung, dass der Prioritätswert größer oder gleich dem Prioritätsschwellwert ist, erteilt wird. Auf diese Weise kann unter den zufällig für den Zugriff auf diesen Telekommunikationskanal berechtigten Teilnehmerstationen zusätzlich eine weitere Auswahl getroffen werden, die Teilnehmerstationen höherer Priorität für den Zugriff auf diesen Telekommunikationskanal bevorzugt. Auch auf diese Weise können Teilnehmerstationen von Notdiensten, wie der Polizei oder der Feuerwehr priorisiert werden, allerdings in Abhängigkeit der zufälligen Verteilung mittels Zugriffsschwellwert.

Ein weiterer Vorteil besteht darin, dass in der Auswerteeinheit der mindestens einen Teilnehmerstation geprüft wird, ob die Zugriffsberechtigungsdaten Teilnehmerdiensteinformationen umfassen, die für vom Telekommunikationsnetz angebotene Telekommunikationsdienste angeben, ob der Zugriff auf einen Telekommunikationskanal für die Anforderung eines solchen Telekommunikationsdienstes freigegeben ist. Für jede der nach den oben genannten Kriterien zugriffsberechtigten Nutzerklassen wird zusätzlich festgelegt, welche Telekommunikationsdienste über den Telekommunikationskanal angefordert werden können. Auf diese Weise wird wiederum Übertragungskapazität für die Übertragung der Informationssignale eingespart, da nicht von verschiedenen - nach den obigen Kriterien - zugriffsberechtigten Nutzerklassen unterschiedliche Telekommunikationsdienste angefordert werden können, sondern für jede dieser vorausgewählten Teilnehmerstationen lediglich die spezifizierten Telekommunikationsdienste über diesen Telekommunikationskanal angefordert werden können. Somit muss nur ein Minimum an Dienstinformationen mit den Informationssignalen übertragen werden.

Ein weiterer Vorteil besteht darin, dass in der Auswerteeinheit der mindestens einen Teilnehmerstation geprüft wird, ob die Zugriffsberechtigungsdaten eine Auswerteinformation umfassen, die angibt, ob die Zugriffsberechtigungsdaten entweder einen Zugriffsschwellwert oder Zugriffsklasseninformationen umfassen, und dass die Zugriffsberechtigungsdaten entsprechend dem Prüfergebnis in der mindestens einen Teilnehmerstation ausgewertet werden. Auf diese Weise kann die für die Übertragung der Informationssignale erforderliche Übertragungskapazität weiter reduziert werden, in dem die Zugriffsberechtigungsinformationen entweder nur den Zugriffsschwellwert oder nur die Zugriffsklasseninformationen, jedoch nicht beides zusammen umfassen.

Ein weiterer Vorteil besteht darin, dass der Zugriff auf diesen Telekommunikationskanal der mindestens einen Teilnehmerstation in Abhängigkeit des Nachrichtenverkehrsaufkommens auf mindestens einem Telekommunikationskanal freigegeben wird. Auf diese Weise lässt sich eine optimale Verteilung der Ressourcen des Telekommunikationsnetzes auf die Teilnehmerstationen bei bestmöglicher Nutzung der übertragungskapazität erzielen.

### Zeichnung

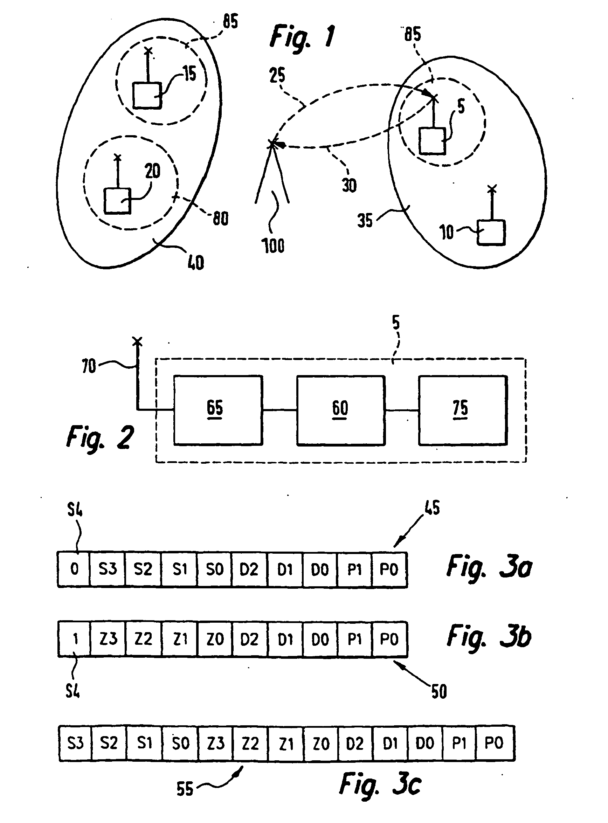

Ausführungsbeispiele der Erfindung sind in der Zeichnung dargestellt und in der nachfolgenden Beschreibung näher erläutert. Es zeigen Figur 1 einen Ausschnitt aus einem Telekommunikationsnetz,
Figur 2 ein Blockschaltbild einer erfindungsgemäßen Teilnehmerstation,
Figur 2a ein erstes Bitmuster für die Zuteilung des Zugriffs auf einen Telekommunikationskanal,
Figur 3b ein zweites Bitmuster für die Zuteilung des Zugriffs auf einen Telekommunikationskanal,
Figur 3c ein drittes Bitmuster für die Zuteilung des Zugriffs auf einen Telekommunikationskanal, und Die Figuren 4a, 4b und 4c einen Ablaufplan für die Funktionsweise einer Auswerteeinheit der erfindungsgemäßen Teilnehmerstation.

### Beschreibung der Ausführungsbeispiele

In Figur 1 kennzeichnet 100 eine Basisstation eines als Mobilfunknetz ausgebildeten Telekommunikationsnetzes. Ein solches Mobilfunknetz ist normalerweise zellular aufgebaut, wobei jede Funkzelle des Mobilfunknetzes von einer Basisstation versorgt wird. Die Basisstation 100 spannt also eine Funkzelle im Mobilfunknetz auf, in der gemäß Figur 1 eine erste Teilnehmerstation 5, eine zweite Teilnehmerstation 10, eine dritte Teilnehmerstation 15 und eine vierte Teilnehmerstation 20 angeordnet sind. Bei den vier Teilnehmerstationen 5, 10, 15, 20 soll es sich beispielhaft um Mobilstationen, wie beispielsweise Mobiltelefone, Funktelefone, oder dergleichen handeln. Bei den hier beschriebenen Ausführungsbeispielen sollen also die erste Teilnehmerstation 5 als erste Mobilstation, die zweite Teilnehmerstation 10 als zweite Mobilstation, die dritte Teilnehmerstation 15 als dritte Mobilstation und die vierte Teilnehmerstation 20 als vierte Mobilstation ausgebildet sein.

Ein Netzbetreiber des Mobilfunknetzes bietet eine vorgegebene Anzahl von Telekommunikationsdiensten an. Im folgenden sollen beispielhaft drei verschiedene Telekommunikationsdienste vom Netzbetreiber angeboten werden können. Dabei kann als ein erster Telekommunikationsdienst beispielsweise ein Dienst für die Versendung kleiner Datenpakete vorgesehen sein, der von den Mobilstationen 5,10,15,20 benutzt werden kann, um kleine Datenpakete an die Basisstation 100 über einen wahlfreien Zugriffskanal 30, der im folgenden beispielhaft als RACH (Random Access Channel) ausgebildet sein soll, zu übertragen. Als ein zweiter Telekommunikationsdienst kann beispielsweise ein Dienst zum Versenden größerer Paketdaten vorgesehen sein, bei dem der RACH 30 von den Mobilstationen 5,10,15,20 benutzt werden darf, um gesonderte Datenkanäle zur Paketdatenübertragung anzufordem. Als ein dritter Telekommunikationsdienst kann beispielsweise ein Dienst zur Sprach-, bzw. leitungsgebundenen Datenübertragung vorgesehen sein, bei dem der RACH 30 von den Mobilstationen 5, 10, 15, 20 benutzt werden darf, um Sprach- und/oder Datenübertragungen einzuleiten oder fortzusetzen.

Die drei Telekommunikationsdienste können einzeln und/oder in beliebiger Kombination den Mobilstationen 5,10,15,20 vom Netzbetreiber erlaubt werden.

Die Telekommunikationsdienste müssen dabei von der entsprechenden Mobilstation über die Basisstation 100 beim Netzbetreiber angefordert werden. Die Telekommunikationsdienste werden üblicherweise über den RACH 30 von den Mobilstationen 5,10,15,20 angefordert oder zugänglich gemacht. Über den RACH 30 können in der Regel Nachrichten von mehreren Mobilstationen an die Basisstation 100 gesendet werden. Auf diese Weise können Nachrichten verschiedener Mobilstationen miteinander kollidieren. Die Basisstation 100 bestätigt daher ordnungsgemäß empfangene Nachrichten, in dem sie entsprechende Bestätigungs- oder Quittierungsinformationen auf einem anderen, in Figur 1 nicht dargestellten Kanal, beispielsweise einem Paging-Kanal, an diejenigen Mobilstationen zurücksendet, deren Nachrichten sie ordnungsgemäß empfangen hat.

Für den Fall, dass die Nachricht einer Mobilstation auf dem RACH 30 mit einer anderen Nachricht kollidiert, findet kein ordnungsgemäßer Empfang dieser Nachricht in der Basisstation 100 statt, so dass die Basisstation 100 auch keine Bestätigungsinformation an die entsprechende Mobilstation zurücksenden kann. Die Mobilstation sendet daher meist nach einer vorgegebenen Zeit, in der keine Bestätigungsinformation von der Basisstation 100 empfangen wurde, die Nachricht erneut über den RACH 30 zur Basisstation 100. Auf diese Weise droht eine Überlastung des RACH 30, der somit die benutzerinitiierte Anforderung von Telekommunikationsdiensten durch die entsprechenden Mobilstationen durch seine begrenzte Übertragungskapazität beschränkt.

Eine Überlastung des RACH 30 kann dadurch vermieden werden, dass der Netzbetreiber den Zugriff auf den RACH für die einzelnen Mobilstationen 5,10,15,20 gezielt einschränkt. Dabei kann der Zugriff auf den RACH beispielsweise nur für bestimmte Nutzerklassen von Mobilstationen vorübergehend oder dauerhaft bevorrechtigt erlaubt werden. Gemäß den beschriebenen Ausführungsbeispielen nach Figur 1 ist eine erste Nutzerklasse 35 vorgesehen, die die erste Mobilstation 5 und die zweite Mobilstation 10 umfasst. Weiterhin ist eine zweite Nutzerklasse 40 vorgesehen, die die dritte Mobilstation 15 und die vierte Mobilstation 20 umfasst. Es kann jedoch auch vorgesehen sein, für jede Mobilstation eine eigene Nutzerklasse vorzusehen. Es könnte auch vorgesehen sein, Nutzerklassen mit unterschiedlicher Anzahl von Mobilstationen vorzusehen. Weiterhin ist es möglich, mehr als zwei Mobilstationen in einer Nutzerklasse vorzusehen. Der Netzbetreiber kann nun den einzelnen Mobilstationen in Abhängigkeit ihrer Zugehörigkeit zu einer der beiden Nutzerklassen 35,40 der Zugriff auf den RACH freigegeben werden. Das bedeutet dass den beiden Mobilstationen 5,10 der ersten Nutzerklasse 35 gleiche Rechte für das Senden auf dem RACH zugeteilt werden. In analoger Weise werden auch den Mobilstationen 15,20 der zweiten Nutzerklasse 40 gleiche Rechte für das Senden auf dem RACH zugeteilt.

Der Netzbetreiber informiert die einzelnen Mobilstationen 5,10,15,20 durch Informationssignale, die von der Basisstation 100 an die jeweilige Mobilstation 5,10,15,20 übertragen werden, welche Rechte für das Senden auf dem RACH der entsprechenden Mobilstation 5,10,15,20 zugeteilt sind. Dies wird stellvertretend für alle Mobilstationen 5,10,15,20 im folgenden anhand der Zuteilung der Rechte für das Senden auf dem RACH an die erste Mobilstation 5 gemäß Figur 1 beschrieben.

Dabei überträgt die Basisstation 100 zu vorgegebenen Zeiten Informationssignale an die erste Mobilstation 5. Die Informationssignale können dabei gemäß Figur 1 über einen Signalisierungskanal 25, der im folgenden beispielhaft als Broadcast Control Channel BCCH ausgebildet sein soll, übertragen werden. Dabei wird mit den Informationssignalen zu den vorgegebenen Zeiten jeweils ein Bitmuster an die erste Mobilstation 5 übertragen. Das Bitmuster kann in einer ersten Ausführungsform Informationen darüber enthalten, zu welchem Zweck und für welche Mobilstationen der Zugriff auf den RACH erlaubt ist. Bei den möglichen Zugriffszwecken handelt es sich dabei beispielsweise um die bereits oben beschriebenen Fälle, wie das Versenden kleiner Datenpakete, die Kanalanforderung für größere Paketdaten und die Kanalanforderung für Sprach-/Datendienste. Ein weiterer möglicher Zugriffszweck ist jedoch auch das Versenden von Signalisierungsinformationen von der Teilnehmerstation zur Basisstation, die dem Aufrechterhalten und/oder der Modifikation von bereits bestehenden Verbindungen dienen. Da das von der Basisstation gesendete Bitmuster nicht nur zur ersten Mobilstation 5, sondern auch zu allen anderen Mobilstationen 10,15,20 ebenfalls über den Signalisierungskanal 25, der wie beschrieben als BCCH und damit als Punkt-zu-Mehrpunkt-Kanal ausgebildet ist, so dass alle Mobilstationen die gleichen Informationen zur gleichen Zeit erhalten, gesendet wird, um diesen die ihnen zugeteilten RACH-Zugriffsrechte mitzuteilen, umfasst das Bitmuster die zugeteilten Zugriffsrechte für jede Nutzerklasse 35,40.

Eine zufällige Streuung der Zugriffsberechtigung auf den RACH 30 über einen Teil der Mobilstationen 5,10,15,20 wird erreicht, indem auf dem BCCH 25 ein Zugriffsschwellwert S gesendet wird. In Figur 2 ist beispielhaft ein Blockschaltbild der ersten Mobilstation 5 dargestellt. Die erste Mobilstation 5 umfasst dabei eine Sende-/Emfpangseinheit 65 mit einer Sende/Empfangsantenne 70. Die Sende-/Emfpangseinheit 65 ist außerdem an eine Auswerteeinheit 60 angeschlossen, die auf eine Zugriffsberechtigungskarte 75, beispielsweise eine SIM-Karte (Subscriber-Identity-Module) zugreift. In Figur 2 sind nur die für die Beschreibung der Erfindung erforderlichen Elemente der ersten Mobilstation 5 dargestellt. Das erfindungsgemäße Verfahren wird im folgenden beispielhaft anhand der ersten Mobilstation 5 beschrieben, wobei die zweite Mobilstation 10, die dritte Mobilstation 15 und die vierte Mobilstation 20 ebenfalls den gemäß Figur 2 beschriebenen Aufbau aufweisen. Die erste Mobilstation 5 empfängt mittels ihrer Sende/Empfangseinheit 65 die über den BCCH 25 übertragenen Informationssignale, die den Zugriffsschwellwert S umfassen. Der Zugriffsschwellwert S wird der Auswerteeinheit 60 zugeführt. Die Auswerteeinheit 60 zieht vor jedem Zugriff der ersten Mobilstation 5 auf dem RACH 30 eine Zufalls- oder Pseudozufallszahl R und prüft, ob die Zufalls- oder Pseudozufallszahl R mindestens so gross wie der Zugriffsschwellwert S ist. Nur dann ist ein Zugriff auf den RACH 30 erlaubt. Dabei gilt beispielsweise, dass der Zugriffsschwellwert S aus dem Intervall {0,1...n+1} und die Zufalls- oder Pseudozufallszahl R aus dem Intervall {0.1... n} ist. Dadurch kann die Nutzung des RACH 30 mit dem Zugriffsschwellwert S = n +1 für alle Mobilstationen 5,10,15,20 eingeschränkt, das heißt der Zugriff auf den RACH 30 verhindert werden. Wird die Zufalls- oder Pseudozufallszahl R mittels einer gleich verteilten Zufallsfunktion aus dem entsprechenden Intervall (0,1 .... n) gezogen, so ist die Wahrscheinlichkeit zum Zugriff auf den RACH 30 für alle Mobilstationen 5,10,15,20 gleich.

Im folgenden wird anhand der Figuren 3a und 3b ein erstes Ausführungsbeispiel beschrieben. Zugriffsberechtigungsdaten 45, 50, 55 sind im ersten Ausführungsbeispiel und den weiteren Ausführungsbeispielen als Bitmuster ausgeführt, wobei die Zugriffsberechtigungsdaten 45, 50, 55 mit den Informationssignalen an die Mobilstationen 5, 10, 15, 20 übertragen werden und wobei die Zugriffsberechtigungsdaten 45, 50, 55 die Informationen über die Rechte zur Nutzung des RACH 30 umfassen. Im ersten Ausführungsbeispiel werden an jede Mobilstation 5, 10, 15, 20 Informationssignale übertragen, die jeweils ein Bitmuster, bestehend aus 10 Bits, umfassen. Dabei ist ein erstes Bit ein Auswertebit S4. Die Figur 3a zeigt den Fall, in dem das Auswertebit S4 = 0 ist Das zweite Bit ist dann ein erstes Zugriffsschwellwert-Bit S3, dass dritte Bit ein zweites Zugriffsschwellwert-Bit S2, dass vierte Bit ein drittes Zugriffsschwellwert-Bit S1 und das fünfte Bit ein viertes Zugriffsschwellwert-Bit S0. Mit den vier Zugriffsschwellwert-Bits S3, S2, S1, S0 lassen sich an diesem Beispiel 2<4> = 16 Zugriffsschwellwerte S vom Netzbetreiber an die Mobilstationen 5,10,15,20 übertragen, wobei über den BCCH 25 zu allen Mobilstationen 5,10,15,20 der gleiche Zugriffsschwellwert S übertragen wird. Je nach dem aktuellen Nachrichtenverkehrsaufkommen im Telekommunikationsnetz kann der Zugriffsschwellwert S dabei größer oder kleiner eingestellt, dass heißt verändert bzw. angepasst werden. Bei 16 möglichen Zugriffsschwellwerten S können maximal 16 Zugriffsklassen für die Mobilstationen 5,10,15,20 gebündelt werden, wobei die Zugehörigkeit einer Mobilstation 5,10,15,20 zu einer der 16 Zugriffsklassen vom Ziehen einer von 16 Zufalls- oder Pseudozufallszahlen R in der jeweiligen Auswerteeinheit der Mobilstation 5,10,15,20 abhängt und sich somit bei jedem neuen Ziehvorgang ändern kann. Das sechste Bit im ersten Bitmuster 45 ist ein erstes Telekommunikationsdienst-Bit D2, das siebte Bit ist ein zweites Telekommunikationsdienst-Bit D1 und das achte Bit ist ein drittes Telekommunikationsdienst-Bit D0. Das erste Tetekommunikationsdienst-Bit D2 gibt an, ob der erste Telekommunikationsdienst genutzt werden kann, das zweite Telekommunikationsdienst-Bit D1 gibt an, ob der zweite Telekommunikationsdienst genutzt werden kann und das dritte Telekommunikationsdienst-Bit D0 gibt an, ob der dritte Telekommunikationsdienst genutzt werden kann. Es kann vereinbart werden, das ein Telekommunikationsdienst dann nutzbar ist, wenn das zugehörige Telekommunikationsdienst-Bit gesetzt ist.

Die Mobilstationen 5,10,15,20 können zusätzlich in sogenannte Prioritätsklassen 80,85 eingeteilt sein. Gemäß Figur 1 ist die vierte Mobilstation 20 in eine erste Prioritätsklasse 80 eingeteilt. Die erste Mobilstation 5 und die dritte Mobilstation 15 sind gemäß Figur 1 in eine zweite Prioritätsklasse 85 eingeteilt. Die zweite Mobilstation 10 ist gemäß Figur 1 in keine Prioritätsklasse eingeteilt. Das neunte Bit des ersten Bitmusters 45 ist ein erstes Prioritätsbit P1 und das zehnte Bit des ersten Bitmusters 45 ist ein zweites Prioritätsbit P0. Somit kann über das erste Bitmuster 45 ein Prioritätsschwellwert P mit vier verschiedene Werten zu den Mobilstationen 5,10,15,20 übertragen werden. Es sind daher maximal vier Prioritätsklassen mit jeweils unterschiedlicher Priorität durch den Prioritätsschwellwert P unterscheidbar. Gemäß Figur 1 sind nur zwei der gemäß Figur 3a möglichen vier Prioritätsklassen dargestellt. So könnte beispielsweise die erste Prioritätsklasse 80 eine Prioritätsklasse für Notdienste wie beispielsweise der Polizei oder der Feuerwehr mit dem höchsten Prioritätswert 4 darstellen. Die zweite Prioritätsklasse 85 könnte beispielsweise eine Prioritätsklasse für einen städtischen Energieversorger mit einem etwas niedrigeren Prioritätswert 3 darstellen. Falls eine Mobilstation 5,10,15,20 zu einer Prioritätsklasse gehört, so ist der zugehörige Prioritätswert auf der Zugangsberechtigungskarte 75 abgelegt und kann dort von der Auswerteeinheit 60 ermittelt werden. Von den Mobilstationen 5,10,15,20, die eine Zufalls- oder Pseudozufallszahl R größer oder gleich den Zugriffsschwellwert S ziehen, erhalten dann nur diejenigen Zugriffsberechtigung auf den RACH 30, deren Prioritätswert auch größer oder gleich dem Prioritätsschwellwert P ist. Im Falle der zweiten Mobilstation 10, die keiner Prioritätsklasse zugeordnet ist, kann dabei vorgesehen sein, dass ihre Auswerteeinheit einen Zufalls- oder Pseudozufallsprioritätswert aus den vier möglichen Prioritätswerten zieht und den gezogenen Prioritätswert mit den übertragenen Prioritätsschwellwert P vergleicht und die Zugriffsberechtigung für den RACH 30 erhält, wenn der gezogene Zufalls- oder Pseudozufallsprioritätswert größer oder gleich dem Prioritätsschwellwert P ist. Vorausgesetzt ist dabei, dass auch die von der Auswerteeinheit der zweiten Mobilstation 10 gezogenen Zufalls- oder Pseudozufallszahl R größer oder gleich dem Zugriffsschwellwert S ist. Es kann jedoch auch vorgesehen sein, dass die Mobilstationen, die keiner Prioritätsklasse angehören, keinen Vergleich mit dem Prioritätsschwellwert P durchführen müssen, sondern lediglich eine Zufalls- oder Pseudozufallszahl R ziehen müssen, die größer oder gleich dem Zugriffsschwellwert S ist, um auf den RACH 30 zugreifen zu dürfen. Eine Mobilstation ist dann keiner Prioritätsklasse zugeordnet, wenn auf der eingeschobenen Zugangsberechtigungskarte 75 kein Prioritätswert abgelegt ist.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf der Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

In Figur 3b ist ein zweites Bitmuster 50 mit ebenfalls einer Bitlänge von 10 Bit dargestellt, wobei der Aufbau des zweiten Bitmuster 50 dem Aufbau des ersten Bitmusters 45 entspricht mit Ausnahme der Tatsache, dass das Auswertebit S4 auf 1 gesetzt ist und daher das zweite Bit, das dritte Bit, das vierte Bit und das fünfte Bit des zweiten Bitmusters 50 nicht mehr als Schwellwertbits sondern als Zugriffsklassenbits definiert sind. So ist das zweite Bit des zweiten Bitmusters 50 ein erstes Zugriffsklassenbit Z3, das dritte Bit des zweiten Bitmusters 50 ein zweites Zugriffsklassenbit Z2, das vierte Bit des zweiten Bitmusters 50 ein drittes Zugriffsklassenbit Z1 und das fünfte Bit des zweiten Bitmusters 50 ein viertes Zugriffsklassenbit Z0**.** Das erste Zugriffsklassenbit Z3 steht für die erste Nutzerklasse 35, das zweite Zugriffsklassenbit Z2 steht für die zweite Nutzerklasse 40, das dritte Zugriffsklassenbit Z1 steht für eine dritte, in Figur 1 nicht dargestellte Nutzerklasse und das vierte Zugriffsklassenbit Z0 steht für eine vierte in Figur 1 ebenfalls nicht dargestellt Nutzerklasse. Die Zugriffsklassenbits werden in ihrer Gesamtheit auch als Zugriffsklasseninformationen bezeichnet.
Gemäß Figur 1 sind alle Mobilstationen 5,10,15,20 der ersten Nutzerklasse 35 oder der zweiten Nutzerklasse 40 zugeordnet. Weitere, in Figur 1 nicht dargestellte Mobilstationen können ebenfalls der ersten Nutzerklasse 35 oder der zweiten Nutzerklasse 40 zugeordnet sein. Sie können aber auch der dritten Nutzerklasse oder der vierten Nutzerklasse oder gar keiner Nutzerklasse zugeordnet sein. Wenn ein Zugriffsklassenbit im zweiten Bitmuster 50 den Wert 0 hat, dass heißt nicht gesetzt ist, so dürfen alle Mobilstationen der zugeordneten Nutzerklasse auf den RACH 30 zugreifen.

Wenn ein Zugriffsklassenbit des zweiten Bitmusters 50 auf 1 gesetzt ist, so darf keine Mobilstation der zugeordneten Nutzerklasse auf den RACH 30 zugreifen.

Alle Mobilstationen, die auf den RACH 30 zugreifen dürfen, können diejenigen Telekommunikationsdienste nutzen, deren zugeordnete Telekommunikationsdienstbits im ersten Bitmuster 45 bzw. im zweiten Bitmuster 50 gesetzt sind.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf die Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

Die Zugehörigkeit zu einer Nutzerklasse entnimmt die Auswerteeinheit der entsprechenden Mobilstation ebenfalls von der Zugangsberechtigungskarte 75. Ist dort keine Nutzerklasse gespeichert, so erkennt die Auswerteeinheit der entsprechenden Mobilstation, dass diese keiner Nutzerklasse angehört.

Wenn das Auswertebit S4 auf 1 gesetzt ist, ist kein Zugriff von Mobilstationen auf den RACH 30 möglich, die keiner Nutzerklasse angehören.

Im folgenden wird am Beispiel für ein mit dem Informationssignal übertragenes Bitmuster der Bitlänge von 10 Bit beschrieben. Bei diesem Beispiel wird die Bitfolge "auf 0 1000 011 01" an die Mobilstationen 5,10,15,20 von der Basisstation 100 über den BCCH 25 gesendet. Das bedeutet, dass die Mobilstationen, die einer Nutzerklasse zugeordnet sind, wie Mobilstationen behandelt werden, die keiner Nutzerklasse zugeordnet sind, da das Auswertebit S4 nicht gesetzt ist. Durch die Zugriffsschwellwert-Bits S3, S2, S1, S0 wird der Zugriffsschwellwert S binär kodiert und durch die Prioritätsbits P1, P0 wird der Prioritätsschwellwert P binär kodiert. Für den Zugriffsschwellwert S ergibt sich somit ein Wert von 8 und für den Prioritätsschwellwert P ein Wert von 1. Ist eine Mobilstation nach Auswertung von P und S zugriffsberechtigt, so darf sie den RACH jedoch lediglich zur Kanalanforderung für größere Paketdatendienste und für Sprach-/Datendienste nutzen. Aufgrund der obigen Einstellung für die Dienstinformation ist es solchen Mobilstationen NICHT erlaubt, den RACH für die Versendung kleiner Datenpakete zu nutzen.
Das zweite, dritte, vierte und fünfte Bit des ersten Bitmusters 45 bzw. des zweiten Bitmusters 50 stellen Zugriffsberechtigungsinformationen dar, die beim ersten Bitmuster 45 den Zugriffsschwellwert S und beim zweiten Bitmuster 50 die Zugangsberechtigung für die vier Nutzerklassen angeben. Das erste Bit bestimmt dabei, ob das zweite bis fünfte Bit gemäß dem ersten Bitmuster 45 oder gemäß dem zweiten Bitmuster 50 interpretiert wird.

In einem zweiten Ausführungsbeispiel wird in Fig 3c ein drittes Bitmuster 55 mit den Informationssignalen von der Basisstation 100 zu den Mobilstationen 5,10,15,20 übertragen, dass eine Bitlänge von 13 Bit aufweist. Das dritte Bitmuster 55 weist kein Auswertebit S4 auf und umfasst daher sowohl die Zugriffsschwellwert-Bits S3,S2,S1,S0 als auch die Zugriffsklassenbits Z3,Z2,Z1,Z0. Zusätzlich umfasst das dritte Bitmuster 55 wie auch das erste Bitmuster 45 und das zweite Bitmuster 50 die Telekommunikationsdienstbits D2,D1,D0 und die Prioritätsbits P1,P0. Mobilstationen, die einer Nutzerklasse angehören, für die das zugehörige Zugriffsklassenbit = 0 ist, können unabhängig vom Zugriffsschwellwert S und vom Prioritätsschwellwert P und damit ggf. ohne deren Auswertung in der Auswerteeinheit 60 auf den RACH 30 zugreifen. Mobilstationen, die einer Nutzerklasse angehören, deren zugeordnetes Zugriffsklassenbit auf 1 gesetzt ist, sowie Mobilstationen, die keiner Nutzerklasse angehören, müssen zur Ermittlung ihrer Zugriffsberechtigung auf den RACH 30 die bereits im ersten Ausführungsbeispiel beschriebenen Zugriffsschwellwert - und ggf. zusätzlich die im ersten Ausführungsbeispiel beschriebenen Prioritätsschwellwertauswertung durchführen. Als Beispiel wird die folgende Bitfolge betrachtet: "1000 0110 011 01". Dies bedeutet, dass eine Zugriffsschwelle S = 8 gewählt wurde, dass die Mobilstationen der ersten Nutzerklasse 35 und der vierten, in Figur 1 nicht dargestellten Nutzerklasse unabhängig von einer Auswertung des Zugriffsschwellwertes S und ggf. des Prioritätsschwellwertes P auf den RACH 30 zugreifen dürfen, dass die Mobilstationen der zweiten Nutzerklasse 40 und der in Figur 1 nicht dargestellten dritten Nutzerklasse nicht ohne Auswertung des Zugriffsschwellwertes S und ggf. des Prioritätsschwellwertes auf den RACH 30 zugreifen dürfen. Für den Prioritätsschwellwert P ergibt sich ein Wert von 1. Die zugriffsberechtigten Mobilstationen dürfen den RACH nicht zur Versendung kleiner Datenpakte nutzen, jedoch dürfen sie auf dem RACH Kanalanforderungen für größere Paketdatendienste und Sprach-/Datendienste senden. Im Gegensatz zum ersten Ausführungsbeispiel ist es beim zweiten Ausführungsbeispiel möglich, dass neben Mobilstationen, die aufgrund ihrer Zugehörigkeit zu einer Nutzerklasse auf den RACH 30 zugreifen dürfen, auch solche Mobilstationen auf den RACH 30 zugreifen dürfen, die eine Zufalls- oder Pseudozufallszahl R größer gleich dem Zugriffsschwellwert S ziehen und ggf. einen Prioritätswert oberhalb des Prioritätsschwellwertes P aufweisen.

Im Vergleich zum ersten Bitmuster und zum zweiten Bitmuster enthalten beim dritten Bitmuster die Zugriffsberechtigungsinformationen sowohl die Zugriffsschwellwertbits S3, S2, S1, S0 als auch die Zugriffsklassenbits Z3, Z2, Z1, Z0.

Die im ersten, zweiten und dritten Bitmuster 45, 50 ,55 verwendeten Anzahlen von Bits für den Zugriffssschwellwert S, die Zugriffsklasseninformation Z0, Z1, Z2, Z3, den Prioritätsschwellwert P und die Teilnehmerdiensteinformationen D0, D1, D2 sind lediglich beispielhaft zu verstehen und können, beispielsweise zum umfangreicheren Signalisieren erhöht und zur Bandbreitenreduktion verringert werden. In diesem Fall ändert sich gegebenenfalls auch die Gesamtlänge der Bitmuster 45, 50, 55. Gegebenenfalls können einzelne der Informationskomponenten auch gänzlich ausgelassen werden.

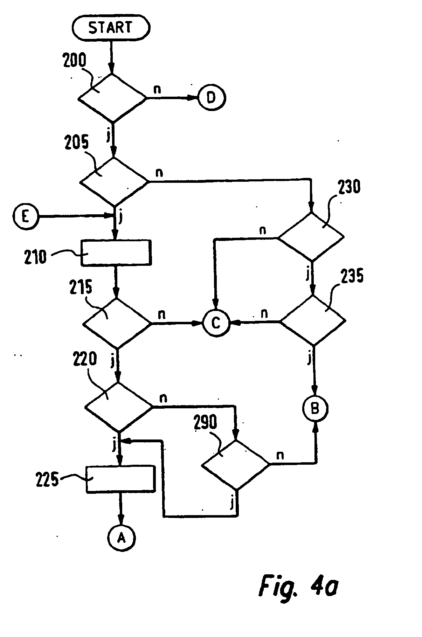

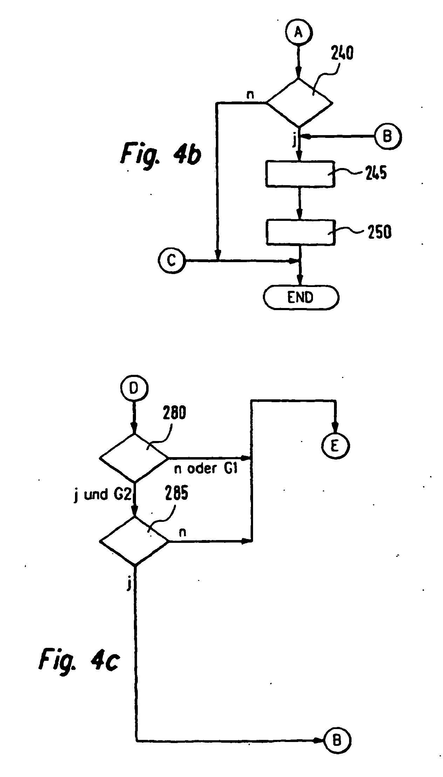

In den Figuren 4a, 4b und 4c ist ein Ablaufplan für die Funktionsweise der Auswerteeinheit 60 dargestellt. Bei einem Programmpunkt 200 prüft die Auswerteeinheit 60, ob die über den BCCH 25 empfangenen Informationssignale ein Bitmuster der Bitlänge von 10 Bit umfassen. Ist dies der Fall, so wird zu einem Programmpunkt 205 verzweigt, andernfalls wird zu einem Programmpunkt 280 verzweigt. Beim Programmpunkt 205 prüft die Auswerteeinheit 60, ob das Auswertebit S4 = 0 ist. Ist dies der Fall, so wird zu einem Programmpunkt 210 verzweigt, andernfalls wird zu einem Programmpunkt 230 verzweigt. Bei Programmpunkt 210 ermittelt die Auswerteeinheit 60 aus den Zugriffsschwellwertbits S3, S2, S1, S0 den Zugriffsschwellwert S und zieht eine Zufalls- oder Pseudozufallszahl R aus der Menge der möglichen Zugriffsschwellwerte S, wobei der größtmögliche Zugriffsschweilwert S für das Ziehen der Zufalls- oder Pseudozufallszahl R ausgenommen sein kann. Anschließend wird zu einem Programmpunkt 215 verzweigt. Bei Programmpunkt 215 prüft die Auswerteeinheit 60, ob die Zufalls- oder Pseudozufallszahl R größer oder gleich dem Zugriffsschwellwert S ist. Ist dies der Fall, so wird zu einem Programmpunkt 220 verzweigt, andernfalls wird das Programm verlassen. Bei Programmpunkt 220 prüft die Auswerteeinheit 60, ob auf der Zugangsberechtigungskarte 75 ein Prioritätswert einer zugehörigen Prioritätsklasse gespeichert ist. Ist dies der Fall, so wird zu einem Programmpunkt 225 verzweigt, andernfalls wird zu einem Programmpunkt 290 verzweigt. Bei Programmpunkt 290 prüft die Auswerteeinheit 60, ob in einem ihr zugeordneten Speicher ein vorgegebener Prioritätswert abgelegt ist. Ist dies der Fall, so wird zum Programmpunkt 225 verzweigt, andernfalls wird zu einem Programmpunkt 245 verzweigt. Bei Programmpunkt 225 ermittelt die Auswerteeinheit 60 aus dem empfangenen Bitmuster den Prioritätsschwellwert P. Anschließend wird zu einem Programmpunkt 240 verzweigt. Bei Programmpunkt 240 prüft die Auswerteeinheit 60, ob der Prioritätswert größer oder gleich der Prioritätsschwelle P ist. Ist dies der Fall, so wird zum Programmpunkt 245 verzweigt, andernfalls wird das Programm verlassen. Bei Programmpunkt 245 ermittelt die Auswerteeinheit 60 aus dem Bitmuster anhand der Telekommunikationsdienstbits die nutzbaren Telekommunikationsdienste. Anschließend wird zu einem Programmpunkt 250 verzweigt. Bei Programmpunkt 250 gibt die Auswerteeinheit 60 den Zugriff der zugehörigen Mobilstation auf den RACH 30 zur Nutzung der nutzbaren Telekommunikationsdienst frei. Anschließend wird das Programm verlassen. Bei Programmpunkt 230 prüft die Auswerteeinheit 60, ob auf der Zugangsberechtigungskarte 75 die Zugehörigkeit zu einer Nutzerklasse gespeichert ist. Ist dies der Fall, so wird zu einem Programmpunkt 235 verzweigt, andernfalls wird das Programm verlassen. Bei Programmpunkt 235 prüft die Auswerteeinheit 60 anhand der Zugriffsklassenbits, ob die anhand der Zugangsberechtigungskarte 75 ermittelte Nutzerklasse der Mobilstation für den Zugriff auf den RACH 30 zulässig ist. Ist dies der Fall, so wird zu Programmpunkt 245 verzweigt, andernfalls wird das Programm verlassen. Bei Programmpunkt 280 hat die Auswerteeinheit 60 erkannt, dass ein Bitmuster mit der Bitlänge von 13 Bit empfangen wurde und prüft, ob auf der Zugangsberechtigungskarte 75 eine Zugehörigkeit der zugehörigen Mobilstation zu einer Nutzerklasse gespeichert ist. Weiterhin wird bei Programmpunkt 280 geprüft, ob die Nutzerklasse zu einer ersten Gruppe von Nutzerklassen oder zu einer zweiten Gruppe von Nutzerklassen gehört. Die erste Gruppe von Nutzerklassen wird im folgenden auch als normalprivilegiert bezeichnet. Die zweite Gruppe von Nutzerklassen wird im folgenden auch als bevorrechtigt bezeichnet. Falls bei Programmpunkt 280 erkannt wird, dass auf der Zugangsberechtigungkarte 75 eine Zugehörigkeit der zugehörigen Mobilstation zu der bevorrechtigten Nutzerklasse besteht, so verzweigt das Programm zu Programmpunkt 285. Andernfalls, d.h. falls auf der Zugangsberechtigungskarte 75 keine Zugehörigkeit der Mobilstation zu einer Nutzerklasse erkannt wird oder wenn die normalprivilegierte Nutzerklasse erkannt wird, so verzweigt das Programm zu Programmpunkt 210. Ist dies der Fall, so wird zu einem Programmpunkt 285 verzweigt, andernfalls wird zu einem Programmpunkt 210 verzweigt. Bei Programmpunkt 285 prüft die Auswerteeinheit 60 anhand der Zugriffsklassenbits bei Z3, Z2, Z1, Z0 des empfangenen Bitmusters ob die für die Mobilstation ermittelte Nutzerklasse für den Zugriff auf den RACH 30 berechtigt ist. Ist dies der Fall, so wird zu Programmpunkt 245 verzweigt, andernfalls wird zu Programmpunkt 210 verzweigt. In allen Fällen, in denen das Programm nicht ausgehend vom Programmpunkt 250 verlassen wird, wird von der Auswerteeinheit 60 keine Zugriffsertaubnis auf den RACH 30 für die zugeordnete Mobilstation 5 ermittelt. Nach der Beendigung des Programms teilt die Mobilstation dem Benutzer mit, dass der Zugriff auf den RACH 30 nicht möglich war und erwartet weitere Eingaben des Benutzers. Alternativ dazu wird durch eine in der Mobilstation realisierte Warteschleife das Programm neu durchlaufen, so dass das nachfolgende Informationssignal mit dem nachfolgenden Bitmuster abgewartet und zur Ermittlung der Zugangsberechtigung auf den RACH 30 ausgewertet wird.

Die Informationssignale werden von der Basisstation 100 zu der Mobilstation 5,10,15,20 zu vorgegebenen Zeiten, vorzugsweise in regelmäßigen Abständen übertragen. Der Netzbetreiber kann den Zugriff auf den RACH in Abhängigkeit des Nachrichtenverkehrsaufkommens im Telekommunikationsnetz und damit in Abhängigkeit einer erwarteten Auslastung des RACH 30 für die einzelnen Mobilstationen 5,10,15,20 gemäß dem beschriebenen Verfahren erlauben oder sperren. Da sich das Nachrichtenverkehrsaufkommen im Telekommunikationsnetz mit der Zeit verändert, ändert sich auch die erwartete Auslastung des RACH 30 mit der Zeit, so dass Zugriff auf den RACH in der Regel zu verschiedenen Zeiten mittels entsprechend veränderter Bitmusterbelegung den verschiedenen Mobilstationen 5,10,15,20 zugeteilt wird.

Eine Entlastung des RACH 30 kann zusätzlich dadurch erzielt werden, dass ein Wiederholungszähler und/oder ein Wiederholungsabstand vorgesehen ist. Der Wiederholungszähler gibt die maximale Anzahl der erlaubten Wiederholversuche für ein wiederholtes Absenden einer Nachricht von der entsprechenden Mobilstation über den RACH 30 an die Basisstation 100 für den Fall der Kollision mit einer Nachricht einer anderen Mobilstation an. Der Wiederholungsabstand ist ein stochastisches Maß für den zeitlichen Abstand bis zur nächsten Wiederholung der von der jeweiligen Mobilstation an die Basisstation 100 über den RACH 30 gesendeten Nachricht. Je kleiner die Anzahl der erlaubten Wiederholversuche und je größer der Wiederholungsabstand, desto größer die Entlastung des RACH 30. Der Wiederholungszähler und/oder der Wiederholungsabstand kann in regelmäßigen Zeitabständen zusammen mit dem Bitmuster der zugeteilten Zugriffsrechte den entsprechenden Mobilstationen gegebenenfalls zusammen mit weiteren funkzellenspezifischen Informationen auf dem zugehörigen Signalisierungskanal 25 mitgeteilt werden.
Das erfindungsgemäße Verfahren kann in einem Mobilfunknetz nach UMTS-Standard (Universal Mobile Telecommunication System), nach GSM-Standard, oder dergleichen realisiert werden.

Das erfindungsgemäße Verfahren ist nicht auf die Anwendung in einem Mobilfunknetz beschränkt, sondern generell in Telekommunikationsnetzen anwendbar, in denen ein Telekommunikationskanal existiert, welcher zur Anforderung von Telekommunikationsdiensten und/oder zum Versenden von Datenpaketen von mehreren Teilnehmerstationen benutzt wird, wobei das Telekommunikationsnetz beispielsweise auch ein drahtgebundenes Festnetz sein kann.

In einer anderen Ausführungsform kann es auch vorgesehen sein, dass für eine Zugangsberechtigung eine Zufallszahl oder Pseudozufallszahl R kleiner als der Zugriffsschwellwert S vorausgesetzt wird. Entsprechend kann auch für die Prioritätsprüfung mittels des Prioritätsschwellwertes P vorausgesetzt werden, dass die Zufallszahl oder die Pseudozufallszahl R kleiner als der Prioritätsschwellwert P ist.

## Patentansprüche

1. Verfahren zum Betrieb eines als Mobilfunknetz ausgebildeten Telekommunikationsnetzes mit mindestens einer Basisstation (100), die eine Funkzelle aufspannt, in der sich mindestens zwei Mobilstationen (5, 10, 15, 20) befinden,
wobei die Basisstation (100) an die mindestens zwei Mobilstationen (5, 10, 15, 20) Informationssignale und mit den Informationssignalen Zugriffsberechtigungsdaten (55) sendet, welche Informationen darüber enthalten, welche Rechte für welche Mobilstationen (5, 10, 15, 20) für das Senden zur Basisstation auf einen von mehreren Mobilstationen gemeinsam nutzbaren Telekommunikationskanal (30) zugeteilt sind,
**dadurch gekennzeichnet, dass**
die Zugriffsberechtigungsdaten (55),
i. Zugriffsschwellwertbits (S3, S2, S1, S0), die für einen Zugriffsschwellwert S stehen, und
ii. Zugriffsklasseninformationen (Z3, Z2, Z1, Z0) die für Nutzerklassen (35, 40) der mehreren Mobilstationen (5, 10, 15, 20) stehen,
enthalten,
wobei die Zugriffsberechtigungsdaten (55) den Zugriff von Mobilstationen (5,10, 15, 20) auf den gemeinsam nutzbaren Telekommunikationskanal (30) derart erlauben, dass neben Mobilstationen, die aufgrund ihrer Zugehörigkeit zu einer ersten Nutzerklasse (35) unabhängig von einer zufälligen Verteilung durch entsprechende Zugriffsschwellwertinformationen priorisiert auf den gemeinsam nutzbaren Telekommunikationskanal (30) zugreifen dürfen, auch Mobilstationen, die einer anderen, zweiten Nutzerklasse (40) angehören, aufgrund einer Zugriffsschwellwertauswertung auf den gemeinsam nutzbaren Telekommunikationskanal (30) zugreifen dürfen.

2. Verfahren nach Anspruch 1, **dadurch gekennzeichnet, dass** die Zugriffsberechtigungsdaten (45, 50, 55) den Zugriff auf den gemeinsam nutzbaren Telekommunikationskanal (30) derart erlauben, dass die einzelne Mobilstation (5,10,15,20) anhand der Zugriffsklassenbits (Z3, Z2, Z1, Z0) feststellen kann, ob sie
• einer Nutzerklasse angehört, für die das zugehörige Zugriffsklassenbit einen ersten Wert hat, so dass sie unabhängig vom Zugriffsschwellwert S auf den gemeinsam nutzbaren Telekommunikationskanal zugreifen kann, oder
• einer Nutzerklasse angehört, für die das zugehörige Zugriffsklassenbit einen zweiten Wert hat, so dass sie zur Ermittlung ihrer Zugriffsberechtigung auf den gemeinsam nutzbaren Telekommunikationskanal eine Zugriffsschwellwertauswertung durchführen muss.

3. Verfahren nach einem der vorhergehenden Ansprüche, **dadurch gekennzeichnet, dass** die Zugriffsschwellwertauswertung durch Vergleich des Zugriffsschwellwert S mit einer Zufalls- oder Pseudozufallszahl R erfolgt.

4. Verfahren nach einem der vorhergehenden Ansprüche, **dadurch gekennzeichnet, dass** der Zugriff auf den gemeinsam nutzbaren Telekommunikationskanal (30) in Abhängigkeit des Nachrichtenverkehrsaufkommens und damit in Abhängigkeit einer erwarteten Auslastung des gemeinsam nutzbaren Telekommunikationskanals (30) für die einzelnen Mobilstationen (5,10,15,20) ausgestaltet ist.

5. Verfahren nach einem der vorhergehenden Ansprüche, **dadurch gekennzeichnet, dass** der Zugriff auf den gemeinsam nutzbaren Telekommunikationskanal (30) in der Regel zu verschiedenen Zeiten mittels entsprechend veränderter Bitmusterbelegung den Mobilstationen (5,10,15,20) zugeteilt wird.

6. Verfahren nach einem der vorhergehenden Ansprüche, **dadurch gekennzeichnet, dass** von der Basisstation ein Wiederholungszähler und/oder ein Wiederholungsabstand zusammen mit den zugeteilten Zugriffsrechten gesendet wird.

7. Verfahren nach einem der vorhergehenden Ansprüche, **dadurch gekennzeichnet, dass** der gemeinsam nutzbare Telekommunikationskanal (30) als Random Access Channel, RACH, ausgebildet ist.

8. Verfahren nach einem der vorhergehenden Ansprüche, **dadurch gekennzeichnet, dass** der Zugriff auf den gemeinsam nutzbare Telekommunikationskanal (30) nur für bestimmte Nutzerklassen von Mobilstationen vorübergehend oder dauerhaft bevorrechtigt erlaubt werden.

9. Verfahren nach einem der vorhergehenden Ansprüche, **dadurch gekennzeichnet, dass** der erste Wert eine 0 ist und der zweite Wert eine 1 ist.

10. Telekommunikationssystem, aufweisend ein als Mobilfunknetz ausgebildetes Telekommunikationsnetz, mindestens eine Basisstation (100), die eine Funkzelle aufspannt, Mobilstationen und einen Signalisierungskanal (25) zur Übersendung von Informationssignalen von der Basisstation (100) an die Mobilstationen (5, 10, 15, 20), die sich in der Funkzelle befinden, und zur Informierung der einzelnen Mobilstation (5, 10, 15, 20), die einer Nutzerklasse (35, 40) angehört, welche Rechte für das Senden auf einem von mehreren Mobilstationen gemeinsam nutzbaren Telekommunikationskanal der entsprechenden Nutzerklasse (35, 40) zugeteilt sind,
**dadurch gekennzeichnet, dass**
die Basisstation Mittel zur Übersendung von Zugriffsberechtigungsdaten (55) mit den Informationssignalen aufweist , wobei die Zugriffsberechtigungsdaten (55)
• Zugriffsschwellwertbits (S3, S2, S1, S0), die für einen Zugriffsschwellwert S stehen, und
• Zugriffsklasseninformationen (Z3, Z2, Z1, Z0), die für die Nutzerklassen (35, 40) der mehreren Mobilstationen (5,10,15,20) stehen,
enthalten,
wobei die Basisstation Mittel aufweist, die es anhand der Zugriffsberechtigungsdaten (55) erlauben, dass neben Mobilstationen, die aufgrund ihrer Zugehörigkeit zu einer Nutzerklasse (35) unabhängig von einer zufälligen Verteilung durch entsprechende Zugriffsschwellwertinformationen priorisiert auf den gemeinsam nutzbaren Telekommunikationskanal (30) zugreifen dürfen, auch Mobilstationen, die einer anderen Nutzerklasse (40) angehören, aufgrund einer Zugriffsschwellwertauswertung auf den gemeinsam nutzbaren Telekommunikationskanal (30) zugreifen dürfen.

11. Telekommunikationssystem nach Anspruch 10, **dadurch gekennzeichnet, dass** das Telekommunikationssystem Mittel zum Erlauben des Zugriffs anhand der Zugriffsberechtigungsdaten (45, 50, 55) auf den gemeinsam nutzbaren Telekommunikationskanal (30) aufweist derart, dass die einzelne Mobilstation (5,10, 15, 20) anhand der Zugriffsklassenbits (Z3, Z2, Z1, Z0) feststellen kann, ob sie
• einer Nutzerklasse angehört, für die das zugehörige Zugriffsklassenbit einen ersten Wert hat, so dass sie unabhängig vom Zugriffsschwellwert S auf den gemeinsam nutzbaren Telekommunikationskanal zugreifen kann, oder
• einer Nutzerklasse angehört, für die das zugehörige Zugriffsklassenbit einen zweiten Wert hat, so dass sie zur Ermittlung ihrer Zugriffsberechtigung auf den gemeinsam nutzbaren Telekommunikationskanal eine Zugriffsschwellwertauswertung durchführen muss.

12. Telekommunikationssystem nach einem der Ansprüche 10 oder 11, **dadurch gekennzeichnet, dass** die Mobilstation Mittel zum Vergleich des Zugriffsschwellwerts S mit einer Zufalls- oder Pseudozufallszahl R aufweist, um die Zugriffsschwellwertauswertung durchzuführen.

13. Telekommunikationssystem nach einem der Ansprüche 10, 11 oder 12, **dadurch gekennzeichnet, dass** der gemeinsam nutzbare Telekommunikationskanal (30) ein Random Access Channel, RACH, ist.

## Claims

1. Method for operation of a telecommunications network, which is in the form of a mobile radio network, having at least one base station (100) which covers a radio cell in which at least two mobile stations (5, 10, 15, 20) are located,
whereby the base station (100) sends information signals to the at least two mobile stations (5, 10, 15, 20) and with the information signals access authorization data (55), which access authorization data (55) contains information as to what rights have been granted to which mobile stations (5, 10, 15, 20) for transmission to the base station on a telecommunications channel (30) which can be used jointly by a plurality of mobile stations,
**characterized in that**
the access authorization data (55) contains
i. access threshold value bits (S3, S2, S1, S0), which represent an access threshold value S, and
ii. access class information (Z3, Z2, Z1, Z0) which represents user classes (35, 40) of the plurality of mobile stations (5, 10, 15, 20),
whereby the access authorization data (55) so allow mobile stations (5, 10, 15, 20) to access the telecommunications channel (30) which can be used jointly, that, in addition to mobile stations, which on the basis of their association with a first user class (35), can access the jointly usable telecommunications channel (30) independent of a random distribution, prioritized by appropriate access threshold value information, also mobile stations which belong to another, second user class (40) may access the jointly usable telecommunications channel (30) on the basis of an access threshold value evaluation.

2. Method according to Claim 1, **characterized in that** the access authorization data (45, 50, 55) allows access to the jointly usable telecommunications channel (30) such that the individual mobile stations (5, 10, 15, 20) based on the access class bits (Z3, Z2, Z1, Z0 may determine whether it
• belongs to a user class for which the associated access class bit has a first value, such that it can access the telecommunications channel which can be used jointly, independent of the access threshold value S, or
• belongs to a user class, for which the associated access class bit has a second value, such that it must carry out an access threshold value evaluation in order to determine its access authorization to the jointly usable telecommunications channel.

3. Method according to one of the preceding claims, **characterized in that** the access threshold value evaluation is carried out by comparison of the access threshold value S with a random number or pseudo-random number R.

4. Method according to one of the preceding claims, **characterized in that** the access to the jointly usable telecommunications channel (30) is configured for the individual mobile stations (5, 10, 15, 20) as a function of the message traffic level, and therefore as a function of an expected load level on the telecommunications channel (30) which can be used jointly.

5. Method according to one of the preceding claims, **characterized in that** the access to the jointly usable telecommunications channel (30) is generally allocated to the mobile stations (5, 10, 15, 20) at different times, by means of an appropriately changed bit pattern that is used.

6. Method according to one of the preceding claims, **characterized in that** a repetition counter and/or a repetition interval is transmitted by the base station, together with the granted access rights.

7. Method according to one of the preceding claims, **characterized in that** the jointly usable telecommunications channel (30) is in the form of a random access channel RACH.

8. Method according to one of the preceding claims, **characterized in that**, access to the jointly usable telecommunications channel (30) is permitted, authorized temporarily or permanently in advance, only for specific user classes of mobile stations.

9. Method according to one of the preceding claims, **characterized in that** the first value is a 0, and the second value is a 1.

10. Telecommunications system, comprising a telecommunications network which is in the form of a mobile radio network, at least one base station (100) which covers a radio cell, mobile stations (5, 10, 15, 20), and a signalling channel (25) for transmission of information signals from the base station (100) to the mobile stations (5, 10, 15, 20) which are located in the radio cell, and for informing the individual mobile station (5, 10, 15, 20) which belongs to a user class (35, 40) what rights are allocated to the corresponding user class (35, 40) for transmission on a telecommunications channel which can be used jointly by a plurality of mobile stations,
**characterized in that**
the base station comprises means for transmission of access authorization data (55) with the information signals, whereby the access authorization data (55) contain
• access threshold value bits (S3, S2, S1, S0), which represent an access threshold value S, and
• access class information (Z3, Z2, Z1, Z0) which represents user classes (35, 40) of the plurality of mobile stations (5, 10, 15, 20),
whereby the base station comprises means which, on the basis of the access authorization data (55), allow access not only to mobile stations, which can access the jointly usable telecommunications channel (30), on the basis of their association with a user class (35), independent of a random distribution, prioritized by appropriate access threshold value information, but also allow mobile stations which belong to another user class (40) to access the jointly usable telecommunications channel (30) on the basis of an access threshold value evaluation.

11. Telecommunications system according to Claim 10, **characterized in that** the telecommunications system comprises means for permitting access to the jointly usable telecommunications channel (30) on the basis of the access authorization data (45, 50, 55), such that the individual mobile stations (5, 10, 15, 20) can use the access class bits (Z3, Z2, Z1, Z0 to determine whether it
• belongs to a user class for which the associated access class bit has a first value, such that it can access the jointly usable telecommunications channel independently of the access threshold value S, or
• belongs to a user class, for which the associated access class bit has a second value, such that it must carry out an access threshold value evaluation in order to determine its access authorization to the jointly usable telecommunications channel.

12. Telecommunications system according to one of Claims 10 or 11, **characterized in that** the mobile station comprises means for comparison of the access threshold value S with a random number or pseudo-random number R, in order to carry out the access threshold value evaluation.

13. Telecommunications system according to one of Claims 10, 11 or 12, **characterized in that** the jointly usable telecommunications channel (30) is a Random Access Channel RACH.

## Revendications

1. Procédé d'exploitation d'un réseau de télécommunication réalisé sous la forme d'un réseau de radiocommunication mobile, comprenant au moins une station de base (100) qui couvre une cellule de radiocommunication dans laquelle se trouvent au moins deux stations mobiles (5, 10, 15, 20),
la station de base (100) envoyant aux au moins deux stations mobiles (5, 10, 15, 20) des signaux d'information et, avec les signaux d'informations, des données d'autorisation d'accès (55) qui contiennent des informations relatives aux droits qui sont attribués à chaque station mobile (5, 10, 15, 20) pour l'émission vers la station de base sur un canal de télécommunication (30) utilisable en commun par plusieurs stations mobiles, **caractérisé en ce que**
les données d'autorisation d'accès (55) contiennent
i. des bits de valeur de seuil d'accès (S3, S2, S1, S0) qui indiquent une valeur de seuil d'accès, S, et
ii. des informations de classe d'accès (Z3, Z2, Z1, Z0) qui indiquent les classes d'utilisateur (35, 40) de la pluralité de stations mobiles (5, 10, 15, 20),
les données d'autorisation d'accès (55) autorisant l'accès par les stations mobiles (5, 10, 15, 20) au canal de télécommunication (30) utilisable en commun de telle sorte qu'outre les stations mobiles qui, du fait de leur appartenance à une première classe d'utilisateur (35), ont le droit d'accéder au canal de télécommunication (30) utilisable en commun en priorité indépendamment d'une distribution aléatoire par des informations de valeur de seuil d'accès correspondantes, les stations mobiles qui font partie d'une autre, deuxième classe d'utilisateur (40), ont le droit d'accéder au canal de télécommunication (30) utilisable en commun sur la base d'une interprétation de la valeur de seuil d'accès.

2. Procédé selon la revendication 1, **caractérisé en ce que** les données d'autorisation d'accès (45, 50, 55) autorisent l'accès au canal de télécommunication (30) utilisable en commun de telle sorte que chacune des stations mobiles (5, 10, 15, 20) peut déterminer, en se basant sur les bits de classe d'accès (Z3, Z2, Z1, Z0), si
* elle appartient à une classe d'utilisateur pour laquelle le bit de classe d'accès correspondant possède une première valeur de sorte qu'elle peut accéder au canal de télécommunication utilisable en commun indépendamment de la valeur de seuil d'accès, S, ou
* elle appartient à une classe d'utilisateur pour laquelle le bit de classe d'accès correspondant possède une deuxième valeur de sorte qu'elle doit effectuer une interprétation de la valeur de seuil d'accès en vue de déterminer son autorisation d'accès au canal de télécommunication utilisable en commun.

3. Procédé selon l'une des revendications précédentes, **caractérisé en ce que** l'interprétation de la valeur de seuil d'accès est effectuée en comparant la valeur de seuil d'accès S avec un nombre aléatoire ou pseudo-aléatoire R.

4. Procédé selon l'une des revendications précédentes, **caractérisé en ce que** l'accès au canal de télécommunication (30) utilisable en commun est configuré en fonction du volume de trafic d'informations et ainsi en fonction d'une charge attendue du canal de télécommunication (30) utilisable en commun pour les stations mobiles (5, 10, 15, 20) individuelles.

5. Procédé selon l'une des revendications précédentes, **caractérisé en ce que** l'accès au canal de télécommunication (30) utilisable en commun est généralement attribué aux stations mobiles (5, 10, 15, 20) à des moments différents au moyen d'une occupation modifiée en conséquence du modèle binaire.

6. Procédé selon l'une des revendications précédentes, **caractérisé en ce que** la station de base envoie un compteur de répétition et/ou un intervalle de répétition conjointement avec les droits d'accès attribuées.

7. Procédé selon l'une des revendications précédentes, **caractérisé en ce que** le canal de télécommunication (30) utilisable en commun est configuré sous la forme d'un canal à accès aléatoire, RACH.

8. Procédé selon l'une des revendications précédentes, **caractérisé en ce que** l'accès au canal de télécommunication (30) utilisable en commun n'est autorisé en priorité de manière transitoire ou permanente que pour certaines classes d'utilisateur des stations mobiles.

9. Procédé selon l'une des revendications précédentes, **caractérisé en ce que** la première valeur est un 0 et la deuxième valeur un 1.

10. Système de télécommunication, présentant un réseau de télécommunication réalisé sous la forme d'un réseau de radiocommunication mobile, au moins une station de base (100) qui couvre une cellule de radiocommunication et un canal de signalisation (25) pour transmettre des signaux d'information de la station de base (100) aux stations mobiles (5, 10, 15, 20) qui se trouvent dans la cellule de radiocommunication et pour informer les stations mobiles (5, 10, 15, 20) individuelles, qui appartiennent à une classe d'utilisateur (35, 40), des droits qui leur sont attribués pour l'émission sur un canal de télécommunication utilisable en commun par plusieurs stations mobiles de la classe d'utilisateur (35, 40) correspondante,
**caractérisé en ce que**
le station de base présente des moyens pour transmettre des données d'autorisation d'accès (55) avec les signaux d'information, les données d'autorisation d'accès (55) contenant
* des bits de valeur de seuil d'accès (S3, S2, S1, S0) qui indiquent une valeur de seuil d'accès, S, et
* des informations de classe d'accès (Z3, Z2, Z1, Z0) qui indiquent les classes d'utilisateur (35, 40) de la pluralité de stations mobiles (5, 10, 15, 20),
la station de base présentant des moyens qui permettent, au moyen des données d'autorisation d'accès (55), qu'outre les stations mobiles qui, du fait de leur appartenance à une classe d'utilisateur (35), ont le droit d'accéder au canal de télécommunication (30) utilisable en commun en priorité indépendamment d'une distribution aléatoire par des informations de valeur de seuil d'accès correspondantes, les stations mobiles qui font partie d'une autre classe d'utilisateur (40) ont le droit d'accéder au canal de télécommunication (30) utilisable en commun sur la base d'une interprétation de la valeur de seuil d'accès.

11. Système de télécommunication selon la revendication 10, **caractérisé en ce que** le système de télécommunication présente des moyens pour autoriser l'accès au canal de télécommunication (30) utilisable en commun au moyen des données d'autorisation d'accès (45, 50, 55) de telle sorte que chacune des stations mobiles (5, 10, 15, 20) peut déterminer, à l'aide des bits de classe d'accès (Z3, Z2, Z1, Z0), si
* elle appartient à une classe d'utilisateur pour laquelle le bit de classe d'accès correspondant possède une première valeur de sorte qu'elle peut accéder au canal de télécommunication utilisable en commun indépendamment de la valeur de seuil d'accès, S, ou
* elle appartient à une classe d'utilisateur pour laquelle le bit de classe d'accès correspondant possède une deuxième valeur de sorte qu'elle doit effectuer une interprétation de la valeur de seuil d'accès en vue de déterminer son autorisation d'accès au canal de télécommunication utilisable en commun.

12. Système de télécommunication selon l'une des revendications 10 ou 11, **caractérisé en ce que** la station mobile présente des moyens pour comparer la valeur de seuil d'accès S avec un nombre aléatoire ou pseudo-aléatoire R afin d'effectuer l'interprétation de la valeur de seuil d'accès.

13. Système de télécommunication selon l'une des revendications 10, 11 ou 12, **caractérisé en ce que** le canal de télécommunication (30) utilisable en commun est un canal à accès aléatoire, RACH.
